# EUROPÄISCHE PATENTSCHRIFT

(11) **EP 1 817 579 B1**
(45) Veröffentlichungstag und Bekanntmachung des Hinweises auf die Patenterteilung: **01.09.2010**
(21) Anmeldenummer: 05808018.5
(22) Anmeldetag: 11.11.2005
(51) Int. Cl.: G01N 30/72, G01N 30/30, G01N 30/34

(54) **VORRICHTUNG UND VERFAHREN ZUM BESTIMMEN VON STOFFEIGENSCHAFTEN MITTELS HPLC**
DEVICE AND METHOD FOR DETERMINING MATERIAL PROPERTIES BY MEANS OF HPLC (HIGH PERFORMANCE LIQUID CHROMATOGRAPHY)
DISPOSITIF ET PROCEDE POUR DETERMINER DES PROPRIETES DE MATIERE PAR CLHP

(30) Priorität: 16.11.2004 DE 102004000042
(43) Veröffentlichungstag der Anmeldung: 15.08.2007
(73) Patentinhaber: joint analytical systems GmbH, 47445 Moers (DE)
(72) Erfinder: GERSTEL, Joachim, 45475 Mülheim a. d. Ruhr (DE); RADTKE, Jörg, 47506 Neukirchen-Vluyn (DE)
(74) Vertreter: Weisse, Renate
(86) Internationale Anmeldenummer: PCT/EP2005/055902
(87) Internationale Veröffentlichungsnummer: WO 2006/053855

(56) Entgegenhaltungen:
- WO-A-03/029809
- US-A- 4 861 989
- US-A- 4 982 097
- GRUEMPING R ET AL: "HPLC/ICP-OES determination of water-soluble silicone (PDMS) degradation products in leachates" FRESENIUS' JOURNAL OF ANALYTICAL CHEMISTRY, Bd. 363, Nr. 4, Februar 1999 (1999-02), Seiten 347-352, XP002370347 ISSN: 0937-0633

## Beschreibung

### Stand der Technik

Die Erfindung betrifft eine Anordnung zur Bestimmung von Stoffeigenschaften und/oder Stoffkonzentrationen von Komponenten einer Probe in einem flüssigen Laufmittel, welches überwiegend Wasser enthält, enthaltend
(a) eine chromatographische Trennsäule für flüssige Laufmittel,
(b) Mittel zum Steuern der Temperatur innerhalb der Trennsäule in einem Bereich zwischen Raumtemperatur und 250°C,
(c) Mittel zum Erzeugen eines gegenüber Umgebungsdruck erhöhten Druckniveaus innerhalb der Trennsäule, und
(d) einen Detektor mit einem Probenraum, in welchen die Komponenten der Probe einbringbar sind.

Bei der Flüssigkeitschromatographie wird eine Probe, zum Beispiel ein Stoffgemisch aus verschiedenen Komponenten, zusammen mit einem Laufmittel durch eine chromatographische Trennsäule geleitet. Die Trennsäule ist mit einer stationären Phase gefüllt. Je nach Polarität des Laufmittels, seiner Wechselwirkung mit der Probe und der stationären Phase gelangen die Komponenten nach unterschiedlichen Laufzeiten (Retentionszeiten) an den Säulenausgang. Dort ist ein Detektor angeordnet, der die Fraktionen detektiert. Auf diese Weise wird das Stoffgemisch getrennt und ein Chromatogramm erstellt, welches Auskunft über das Vorliegen eines Stoffes und ggf. seiner Menge gibt. Je nach Laufmittel wird zwischen Gaschromatographie und Flüssigchromatographie unterschieden.

Die Anmelderin vertreibt unter dem Handelsnamen "AED-Plus" (s. www.jas.de) GC-AED Gaschromatographie-Anordnungen, welche mit einem Atomemissions-Detektor (Atomic Emission Detector) arbeiten. Eine Probe wird mit einem gasförmigen Trägergas durch eine Chromatographie-Säule geleitet und anschließend in einem MikrowellenPlasma atomisiert. Die Atome werden bei Temperaturen von 2000 bis 3000 Kelvin thermisch in einen angeregten Zustand versetzt. Aus dem angeregten Zustand gehen die Atome unter Emission von Licht elementspezifischer Wellenlängen zurück in den Grundzustand. Das Licht wird in einem geeigneten Spektrometer nach Wellenlängen getrennt und mit einem Detektor zum Beispiel einem Diodenarray aufgenommen. Die Intensität am Detektor liefert ein Maß für das Vorhandensein eines Elements in der Probe. Durch die chromatographische Trennung erscheinen die Signale zeitlich aufgelöst am Detektor. Zur Erzeugung des Plasmas wird ein mikrowelleninduziertes Helium Plasma verwendet.

Das Mikrowellenplasma wird in einer geometrisch vergleichsweise kleinen Plasmafackel erzeugt, da es für die Gaschromatographie eingesetzt wird. Vorteil ist es das Helium sowohl als Trägergas als auch für die Erzeugung des Plasmas verwendet wird. Die Fackel besteht aus einem Röhrchen aus Quarz oder Keramik von 0,8 bis 1 mm Durchmesser. Lösungsmittel, in dem die Probe gelöst wurde, kann sich als organischer Kohlenstoff an der Röhrchenoberfläche niederschlagen. Die Wandung wird dann besonders heiß und kann beschädigt werden. Daher wird das Lösungsmittel ausgeblendet und nicht in das Plasma geleitet. Das ist aufwändig.

Unter dem Begriff ICP-OES (Inductively Coupled Plasma-Optical Emission Spectroscopy) ist ein Verfahren bekannt, welches ebenfalls als Detektor für die Chromatographie geeignet ist. Durch eine Induktionsspule wird ein Argonplasma mit etwa 8000 Kelvin erzeugt. Die flüssige Probe wird als Aerosol in das Plasma eingebracht und dort atomisiert und angeregt. Die so erzeugten Emissionsspektren können wie bei einem Mikrowellenplasma spektrometrisch analysiert werden. Der Plasmaraum (ICP torch) besitzt einen Innendurchmesser von 1-2 cm. Das Plasma ist so heiß, daß hier eine hohe Ausbeute an Atomen und Molekülen im Anregungszustand erzielt wird. Alternativ werden bei der ICP-MS die Atome massenspektrometrisch statt optisch untersucht.

Bei der HPLC (High Performance Liquid Chromatography) erfolgt die Trennung nicht mit einem gasförmigen, sondern einem flüssigen Laufmittel unter hohem Druck. Als Laufmittel werden im allgemeinen für die Reversed Phase HPLC organische Lösungsmittel wie Acetonitril, Tetrahydrofuran mit Wasser eingesetzt. Es werden also sehr große Mengen an organischem Laufmittel verwendet, welche starke Störungen hervorrufen können. Die obigen Techniken sind daher für die HPLC nicht geeignet. Auch ist die maximale Anzahl an basisliniengetrennten Peaks pro Zeiteinheit geringer als bei der Gaschromatographie.

Bei der Verwendung von (evakuierten) Massenspektrometern als Detektoren ist es bekannt, ein Interface (Nebulizer) für Flüssigchromatographie einzusetzen. In dem Interface wird ein Aerosol aus dem organischen Laufmittel mit den Probenbestandteilen erzeugt. Das Aerosol wird anschließend massenspektrometrisch analysiert. Dies ist aufwändig.

WO 03/029809 offenbart eine HPLC-Anordnung, welche mit Wasser bei erhöhten Temperaturen bis 250°C arbeitet. Die Anordnung umfasst am Ausgang einen Wärmetauscher mit dem das Laufmittel auf eine geeignete Temperatur gekühlt wird um den Detektor zu schützen. Unterhalb von 100°C, und insbesondere bei der Umgebungstemperatur ist das Wasser bei Umgebungsdruck flüssig.

US 4,982,097 beschreibt ein Interface zwischen einer LC-Säule und einem Massenspektrometer. Das flüssige Lösungsmittel mit der Probe tritt an einer Seite in das Interface ein und wird darin durch Wärmezufuhr verdampft. Der Dampf tritt am anderen Ende aus und wird dem Massenspektrometer zugeführt. Die Verdampfung erfolgt ausschließlich durch Zuführung von thermischer Energie.

US 4,861,989 offenbart eine Thermosprayanordnung für HPLC-MS mit einem zweistufigen Verfahren zur Erzeugung von Probendampf. Die Anordnung sieht in einem Ausführungsbeispiel vor, dass die Kapillarsäule am Ende einen geringeren Querschnitt aufweist.

### Aufgabe der Erfindung

Es ist Aufgabe der Erfindung eine Vorrichtung der eingangs genannten Art zu schaffen, welche einfach aufgebaut ist, kostengünstig herstellbar ist und bei welcher Störungen durch das Laufmittel bei höherem Probendurchsatz verringert werden.

### Beschreibung der Erfindung

Erfindungsgemäß wird die Aufgabe dadurch gelöst, dass
(e) ein Interface (16) zwischen der Trennsäule und dem Detektor vorgesehen ist, mit einem Röhrchen (34) und einem innerhalb des Röhrchens vorgesehenen Restriktor (34) wobei der Restriktor zum Entspannen des Laufmittels von dem erhöhten Druckniveau innerhalb der Trennsäule auf Umgebungsdruck und Erzeugung eines Phasenwechsel des Laufmittels von der flüssigen zur gasförmigen Phase ohne Aerosolbildung vorgesehen ist, wobei im Bereich vor dem Restriktor das Laufmittel mit der Probe flüssig ist und unter hohem Druck steht und im Bereich hinter dem Restriktor Umgebungsdruck herrscht,
(f) eine Heizung im Bereich hinter dem Restriktor vorgesehen ist, und
(g) Mittel zum Überführen des die Komponenten der Probe enthaltenen, gasförmigen Laufmittels in den Probenraum des Detektors vorgesehen sind. Im Gegensatz zu bekannten Anordnungen, bei denen Wasser als Laufmittel eingesetzt wird, wird das probenhaltige Laufmittel nicht gekühlt und flüssig in den Probenraum eingebracht. Vielmehr wird hier Wasser bei hohen Temperaturen in den Atmosphärendruck entspannt. Aufgrund des Druckabfalls verdampft das Wasser zu Gas. Die Probe wird also nicht in Form eines Aerosols in den Probenraum eingesprüht, sondern als Gas. Das heiße Gas wird dann in den Probenraum eingebracht. Eine aufwändige Kühlung entfällt. Besonderer Vorteil bei dieser Vorgehensweise ist es, daß lediglich Wasser als Matrix vorliegt und die Anordnung daher ohne störenden Matrix-Untergrund arbeitet. Auf diese Weise lassen sich sehr gute Nachweisgrenzen und eine hohe Richtigkeit erzielen. Die Komponenten werden nicht verunreinigt und es bilden sich keine Ablagerungen durch das Laufmittel. Der durch das Wasser erzeugte Wasserstoff und Sauerstoffanteil wirkt im Probenraum als Dopandgas und fördert die Bildung von Atomen. Wasser ist ein kostengünstiger, umweltfreundlicher Rohstoff, der leicht verfügbar ist und dessen physikalische und chemische Eigenschaften gut bekannt sind.

Die Trennung in der chromatographischen Säule erfolgt durch geeignete Steuerung der Temperatur. Die Trennung basiert auf der Temperaturabhängigkeit der Polarität von Wasser, welche über einen weiten Bereich steuerbar ist.

Vorzugsweise ist die chromatographische Trennsäule eine Hochtemperatur-HPLC-Säule. Durch hochtemperaturfeste Materialien für die Säule und die stationäre Phase kann der Temperaturbereich und damit der Anwendungsbereich der Anordnung ausgedehnt werden.

Vorzugsweise sind die Komponenten der Probe in dem Probenraum zur Emission von Licht anregbar, welches wellenlängenselekiv detektierbar ist. Das emittierte Licht kann in einem optischen Spektrometer z.B. mit einem Gitter oder Prisma zerlegt und simultan mit einem Diodenarray oder einem CCD-Detektor zeitaufgelöst aufgenommen werden. Dabei können je nach Anwendungsgebiet sowohl spektrographische Anordnungen, bei denen alle Wellenlängen gleichzeitig detektiert werden, als auch monochromatische Anordnungen, bei denen eine spezifische Wellenlänge eingestellt wird, verwendet werden.

Alternativ ist ein Massenspektrometer für die massenspektrometrische Analyse der Komponenten der Probe in dem Probenraum vorgesehen. Auch mit einem Massenspektrometer sind Varianten, bei welchen massenselektiv oder mehrere Massen simultan aufgenommen werden, geeignet.

In dem Probenraum kann ein Mikrowellenplasma oder ein induktiv gekoppeltes Plasma vorgesehen sein. Ein Mikrowellenplasma, welches für AED-Anordnungen verwendet wird, arbeitet bei geringen Temperaturen im Bereich um 2500 K und erzeugt schmale, wohl definierte überwiegend Atomlinien, die elementspezifisch und leicht zu identifizieren sind. Hier können ggf. Untergrundstörungen durch Molekülreste vorliegen. Demgegenüber erzeugt ein induktiv gekoppeltes Plasma bei wesentlich höheren Temperaturen um 8000 K auch Ionenlinien und hat eine wesentlich höhere Ausbeute. Es können aber auch andere Anordnungen zur Erzeugung eines Emissionsspektrums verwendet werden.

In einer besonders bevorzugten Ausgestaltung der Erfindung sind Mittel zum Heizen der Mittel zum Überführen des die Komponenten der Probe enthaltenen, gasförmigen Laufmittels vorgesehen. Diese Mittel umfassen insbesondere eine Heizung und optional Steuermittel zur Steuerung der Temperatur des Gases. Durch Heizen des Gases werden Ablagerungen vermieden und eine thermische Trennung der Moleküle erreicht. Vorzugsweise weisen die Mittel zum Heizen eine Heizleistung auf, die ausreicht um die Komponenten der Probe überwiegend zu atomisieren. Dann ist das Gas bereits bei Erreichen des Probenraums atomisiert und kann ohne weiteres detektiert werden.

Das Gas kann in dem Interface auch ionisiert werden, bevor es detektiert wird.

In einer Ausgestaltung der Erfindung sind ein oder mehrere zusätzliche Dopandgase in den Probenraum zuführbar. Dies ist normalerweise nicht erforderlich, da das Laufmittel ausreichend Wasser und Sauerstoff liefert. Mit dem Dopandgas wird die Bildung von leicht flüchtigen Stoffen gefördert, so daß der Gehalt von schwerflüchtigen Verbindungen besser gemessen werden kann.

Vorzugsweise ist als Laufmittel ein Gemisch aus Wasser und Acetonitril vorgesehen und die Zusammensetzung des Gemischs Wasser:Acetonitril liegt zwischen 95:5 und 55:45 bezogen auf das Volumen.

Die Anordnung ist ferner geeignet für Eluatsplitting. Dabei wird der Restriktor mit einem zusätzlichen Ausgang versehen. Nur ein Teil des Eluats wird in die Gasphase überführt und mit einem geeigneten Detektor gemessen. Ein weiterer Teil wird gekühlt und bleibt flüssig. Er wird in dieser Phase mit einem herkömmlichen Detektor, zum Beispiel DAD, gemessen.

Ausgestaltungen der Erfindung sind Gegenstand der Unteransprüche. Ausführungsbeispiele sind nachfolgend anhand der beigefügten Zeichnungen näher erläutert.

### Beispiele

### Kurze Beschreibung der Zeichnungen

- Fig.1: zeigt eine Anordnung mit einer HPLC-Säule, einem Interface und einem Detektor
- Fig.2: zeigt das Interface aus Fig.1 im Detail
- Fig.3: zeigt die Anordnung aus Fig.1 mit einem Atomemissionsdetektor im Detail

### Beschreibung der Ausführungsbeispiele

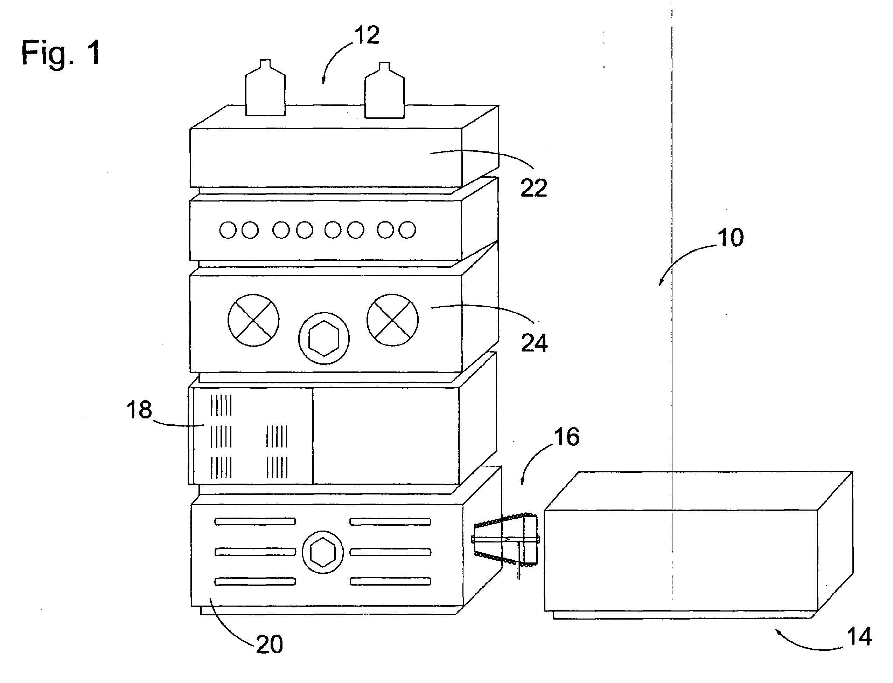

In Fig.1 ist eine allgemein mit 10 bezeichnete Anordnung zur Bestimmung von Stoffeigenschaften und/oder Stoffkonzentrationen von Komponenten einer Probe bezeichnet. Mit der Anordnung können beispielsweise Naturstoffproben analysiert werden und Stereoide oder Antibiotika bestimmt werden. Jede Probe besteht aus einer Vielzahl von Komponenten, die vor der Messung mit einem Detektor voneinander getrennt werden müssen.

Die Anordnung 10 umfasst eine allgemein mit 12 bezeichnete Probenaufgabe- und Trenneinrichtung, einen Detektor 14 und ein dazwischen angeordnetes Interface 16.

Im vorliegenden Fall wird die Probe mit einem Autosampler 18 in eine herkömmliche HPLC (High Performance Liquid Chromatography)- Säule eingeführt, welche in einem Modul 20 mit einem Säulenofen dargestellt ist. In einem Entgaser 22 wird das Laufmittel entgast und mit einer Pumpe 24 auf einen Druck von 300 bar gepumpt.

Die HPLC-Säule besteht aus Edelstahl oder Peek Material und hat einen Innendurchmesser im Bereich von 0,1 bis 4,6 mm. Die Länge beträgt 10 bis 500 mm. Damit lassen sich Flussraten im Bereich zwischen 0,1µl bis 3 ml/min erzeugen. Das gesamte Material ist hochtemperaturfest, so daß die Säule auch auf Temperaturen im Bereich von 200 °C beheizt werden kann ohne zu korrodieren oder anderweitig Schaden zu nehmen. Die stationäre Phase besteht aus bekanntem, hochtemperaturfesten Material wie ZirChrom (Registred Trademark)-Material. Dieses besteht aus Zirkoniumdioxidpartikeln, welche z.B. mit dünnen Schichten aus elementarem Kohlenstoff beschichtet sind. Statt einer solchen Beschichtung sind auch C18-Liganden geeignet, welche mittels kovalenter Bindung an die Partikel gebunden sind. Auch Reversed Phase Material, GPC Material und IC Material ist als stationäre Phase geeignet.

Die Säule wird mit dem Säulenofen beheizt. Dabei wird ein zeitlicher Temperaturgradient zwischen Raumtemperatur und 200°C erzeugt. Dabei verändert das Laufmittel, welches überwiegend Wasser enthält, seine Polarität in weiten Bereichen. Auf diese Weise werden die in der Probe enthaltenen Komponenten beim Durchlaufen der Säule getrennt.

Der Wasseranteil im Laufmittel ist je nach Applikation veränderlich. Während der Analysenphase besteht das Laufmittel zu einem hohen Anteil von wenigstens 40 % aus Wasser. Nach Abschluß der Analysenphase wird der Anteil an organischem Lösungsmittel erhöht, so daß ein Gradient entsteht. Auf diese Weise können Probenreste aus der Säule entfernt werden.

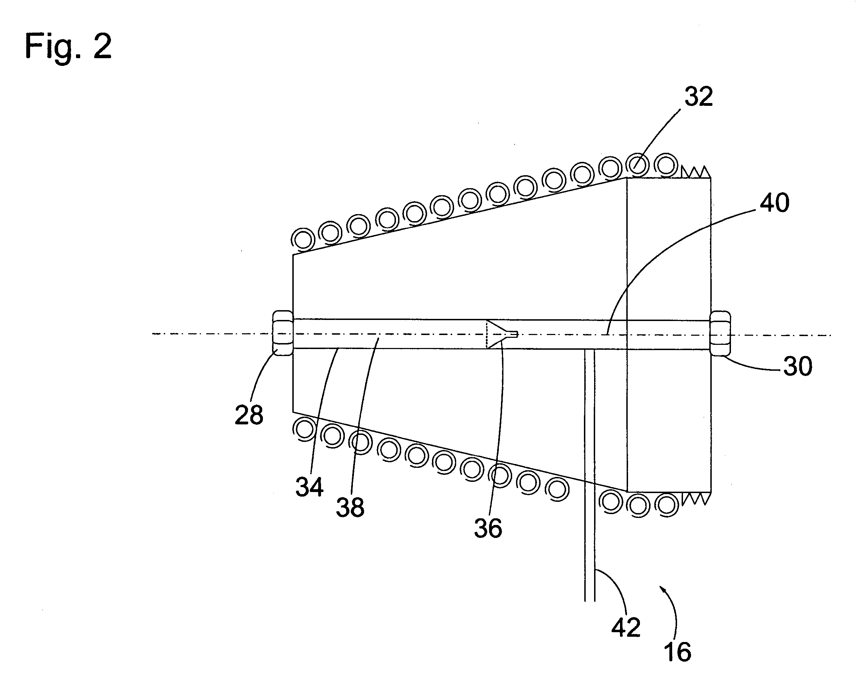

Nach Durchlaufen der Säule gelangt die Probe in dem noch flüssigen, heißen und unter hohem Druck stehenden Laufmittel in das Interface 16. Das Interface 16 ist in Fig. 2 nochmals im Detail dargestellt. Es besteht aus einem Edelstahl-Konus 26 mit Anschlüssen 28 und 30. Die HPLC-Säule ist an dem Anschluß 28 angeschraubt. Der Anschluß 30 stellt die Verbindung zum Probenraum des Detektors 14 her. Der Konus 26 ist vollständig mit einem Heizdraht 32 umgeben. Der Heizdraht 32 ist mit einer nicht dargestellten Steuerung verbunden, über welche der Konus in einem Bereich zwischen Raumtemperatur und 400 °C beheizbar ist. Innerhalb des Konus 26 befindet sich ein Röhrchen 34 aus Edelstahl oder Keramik. Das Röhrchen 34 verbindet den Anschluß 28 mit dem Anschluß 30. Hinter dem Anschluß 28 ist etwa in der Mitte des Interfaces 16 ein variabler Restriktor 36 insbesondere eine Fritte, eine kritische Düse oder eine Lochblende angeordnet. Der Restriktor bildet eine Drossel. Im Bereich 38 vor dem Restriktor 34 ist das Laufmittel mit der Probe flüssig und steht unter hohem Druck. Im Bereich 40 hinter dem Restriktor herrscht Umgebungsdruck. Laufmittel, welches durch den Restriktor 34 in den Bereich 40 gelangt, wird unmittelbar verdampft. Dabei kühlt es sich stark ab.

Durch die Heizung 32 wird die Temperatur jedoch aufrecht erhalten. Es wird kein Aerosol gebildet. Das nun gasförmige Laufmittel gelangt durch den Anschluß 30 in den Probenraum des Detektors 14.

Hinter dem Restriktor 36 weist das Röhrchen 34 einen Anschluß 42 für Dopandgas auf. Je nach Anwendungsfall kann es sinnvoll sein, zusätzliches Dopandgas in Form von molekularem Wasserstoff oder Sauerstoff hinzuzufügen. Dies erleichtert die Detektion von schwerflüchtigen oder schwer anregbaren Substanzen im Probenraum.

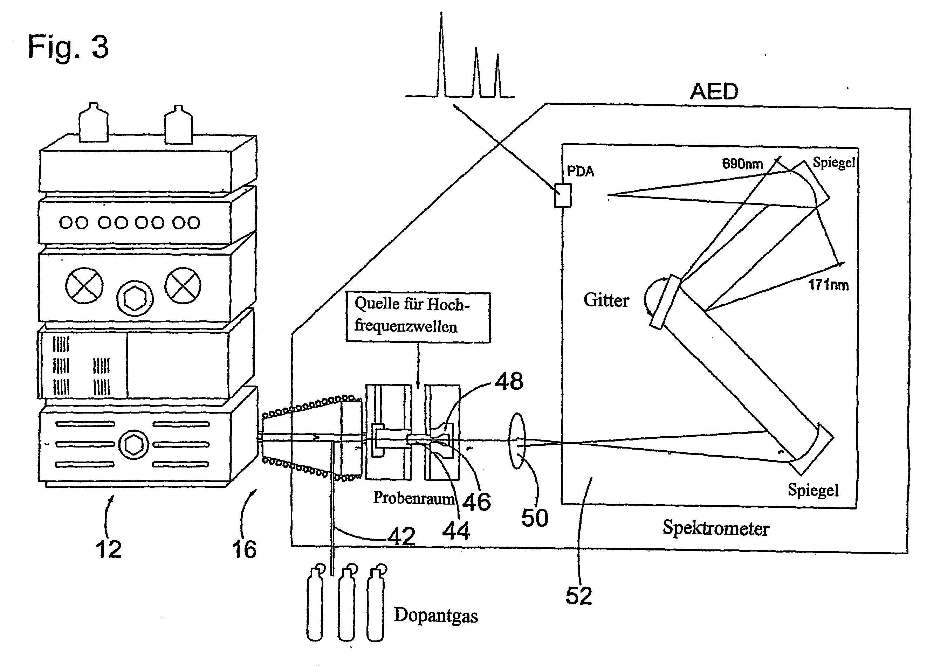

In Fig.3 ist der Detektor im Detail dargestellt. Das aus dem Interface 16 am Anschluß 30 austretende Gas wird unmittelbar in den Probenraum 44 geleitet. Der Probenraum 44 wird von einem Röhrchen 46 umgeben, welches sich in einem Mikrowellengenerator 48 befindet. In das Röhrchen 46 wird Helium geleitet, in welchem der Mikrowellengenerator 48 ein Heliumplasma mit einer Temperatur von 2000 bis 3000 K induziert. Die in das Plasma eingebrachte Probe, bzw. die jeweiligen Komponenten der Probe, die zeitlich getrennt in das Plasma gelangen, werden nun atomisiert und zur Emission von elementspezifischem Licht angeregt.

Die Atome und Molekülfragmente emittieren schmalbandiges Licht auf wohl bekannten Wellenlängen. Dieses Licht wird mit einer Linse 48 in den Eintrittsspalt eines Spektromters 50 abgebildet. In dem Spektrometer 50 wird das Licht mittels eines Gitters 52 dispergiert und wellenlängenselektiv von einem Photodetektor detektiert. Je nach Gitterstellung kann durch Drehung des Gitters ein anderer Wellenlängenbereich auf den Detektor abgebildet werden. Auf diese Weise kann bestimmt werden, welches Element oder welches Molekülfragment detektiert werden soll.

Die Zusammensetzung des Laufmittels variiert je nach applikativer Fragestellung. Für die Bestimmung von Stereoiden wird ausschließlich Wasser als Laufmittel verwendet. Für die Bestimmung von Antibiotika setzt man ein Gemisch mit Wasser:Acetonitril:HCOOH im Verhältnis 80:20:1 ein. In jedem Fall ist aber der Anteil an organischem Lösungsmittel gering. Dadurch werden Störungen durch Signale organischer Komponenten im Plasma vermieden oder wesentlich verringert. Dadurch verbessert sich die Richtigkeit der Ergebnisse sowie der dynamisch Bereich der Messung.

In einem alternativen Ausführungsbeispiel wird statt eines Mikrowellenplasmas eine ICP-MS Anordnung als Detektor verwendet. Hier wird das im Interface erzeugte Gas direkt in ein Argonplasma geleitet. Die Detektion mit dem Massenspektrometer erfolgt auf übliche Weise und braucht hier daher nicht näher beschrieben werden. Auch hier werden Störungen durch unerwünschten organischen Untergrund wesentlich verringert. Eine Anordnung zum Entfernen des Lösungsmittels vor Eintreten in den Probenraum ist nicht erforderlich.

## Patentansprüche

1. Anordnung (10) zur Bestimmung von Stoffeigenschaften und/oder Stoffkonzentrationen von Komponenten einer Probe in einem flüssigen Laufmittel, welches überwiegend Wasser enthält, enthaltend
(a) eine chromatographische Trennsäule für flüssige Laufmittel,
(b) Mittel zum Steuern der Temperatur innerhalb der Trennsäule in einem Bereich zwischen Raumtemperatur und 250°C,
(c) Mittel (24) zum Erzeugen eines gegenüber Umgebungsdruck erhöhten Druckniveaus innerhalb der Trennsäule, und
(d) einen Detektor (14) mit einem Probenraum, in welchen die Komponenten der Probe einbringbar sind,
**dadurch gekennzeichnet, dass**
(e) ein Interface (16) zwischen der Trennsäule und dem Detektor vorgesehen ist, mit einem Röhrchen (34) und einem innerhalb des Röhrchens vorgesehenen Restriktor (34) wobei der Restriktor (34) zum Entspannen des Laufmittels von dem erhöhten Druckniveau innerhalb der Trennsäule auf Umgebungsdruck und Erzeugung eines Phasenwechsel des Laufmittels von der flüssigen zur gasförmigen Phase ohne Aerosolbildung vorgesehen ist, wobei im Bereich (38) vor dem Restriktor das Laufmittel mit der Probe flüssig ist und unter hohem Druck steht und im Bereich (40) hinter dem Restriktor Umgebungsdruck herrscht,
(f) eine Heizung (32) im Bereich (40) hinter dem Restriktor (34) vorgesehen ist, und
(g) Mittel zum Überführen des die Komponenten der Probe enthaltenen, gasförmigen Laufmittels in den Probenraum des Detektors (14) vorgesehen sind.

2. Anordnung nach Anspruch 1, **dadurch gekennzeichnet, dass** die chromatographische Trennsäule eine Hochtemperatur-HPLC-Säule ist.

3. Anordnung nach einem der vorgehenden Ansprüche, **dadurch gekennzeichnet, dass** die Komponente der Probe in dem Probenraum zur Emission von Licht anregbar ist, welches wellenlängenselekiv detektierbar ist.

4. Anordnung nach einem der Ansprüche 1 oder 2, **dadurch gekennzeichnet, dass** ein Massenspektrometer für die massenspektrometrische Analyse der Komponente der Probe in dem Probenraum vorgesehen ist.

5. Anordnung nach einem der vorgehenden Ansprüche, **dadurch gekennzeichnet, dass** ein Mikrowellenplasma im Probenraum vorgesehen ist.

6. Anordnung nach einem der Ansprüche 1 bis 4, **dadurch gekennzeichnet, dass** ein induktiv gekoppeltes Plasma im Probenraum vorgesehen ist.

7. Anordnung nach einem der vorgehenden Ansprüche, **gekennzeichnet durch** Mittel zum Heizen (32) der Mittel zum Überführen des die Komponenten der Probe enthaltenen, gasförmigen Laufmittels in den Probenraum des Detektors.

8. Anordnung nach Anspruch 7, **dadurch gekennzeichnet, dass** die Mittel zum Heizen (32) eine Heizleistung aufweisen, die ausreicht um die Komponenten der Probe überwiegend zu atomisieren.

9. Anordnung nach einem der vorgehenden Ansprüche, **dadurch gekennzeichnet, dass** ein oder mehrere zusätzliche Dopandgase in den Probenraum zuführbar ist.

10. Verfahren zur Bestimmung von Stoffeigenschaften und/oder Stoffkonzentrationen von Komponenten einer Probe in einem flüssigen Laufmittel, welches überwiegend Wasser enthält, mit den Schritten:
(a) Einführen der Probe in eine unter erhöhtem Druck stehende chromatographische Trennsäule mit dem flüssigen Laufmittel,
(b) Aufheizen der Trennsäule auf eine Temperatur innerhalb der Trennsäule, so dass die Komponenten der Probe bei Durchlaufen der Trennsäule voneinander getrennt werden,
(c) Entspannen des Laufmittels von dem erhöhten Druckniveau innerhalb der Trennsäule auf Umgebungsdruck unter Phasenwechsel des Laufmittels von der flüssigen zur gasförmigen Phase an einem innerhalb eines Röhrchens in einem Interface vorgesehenen Restriktor (34) unter Aufrechterhaltung einer erhöhten Temperatur,
(d) Überführen des die Komponenten der Probe enthaltenden, gasförmigen Laufmittels in den Probenraum eines Detektors, und
(e) Detektieren der Komponenten der Probe.

11. Verfahren nach Anspruch 10, **dadurch gekennzeichnet, dass** als Laufmittel ein Gemisch aus Wasser und Acetonitril vorgesehen ist und der Wasseranteil wenigstens 50 Vol.-% beträgt.

12. Verfahren nach Anspruch 10, **dadurch gekennzeichnet, dass** als Laufmittel ein Gemisch aus Wasser, Acetonitril und HCOOH vorgesehen ist und das VolumenVerhältnis der Bestandteile Wasser:Acetonitril:HCOOH etwa 80:20:1 beträgt.

13. Verwendung eines überwiegend oder ausschließlich Wasser enthaltende Flüssigkeit als Laufmittel in einer Anordnung nach einem der Ansprüche 1 bis 9.

14. Interface zum Anschluss eines Detektors an eine chromatographische Trennsäule enthaltend
(a) Anschlussmittel zum Anschließen einer gegenüber der Umgebung unter erhöhtem Druck und erhöhter Temperatur stehenden, chromatographischen Trennsäule für flüssige Laufmittel aus überwiegend Wasser,
(b) einen Restriktor (34) ausgebildet zum Entspannen des Laufmittels von dem erhöhten Druckniveau innerhalb der Trennsäule auf Umgebungsdruck und Erzeugung eines Phasenwechsel des Laufmittels von der flüssigen zur gasförmigen Phase ohne Aerosolbildung, wobei im Bereich (38) vor dem Restriktor das Laufmittel mit der Probe flüssig ist und unter hohem Druck steht und im Bereich (40) hinter dem Restriktor Umgebungsdruck herrscht,
(c) Mittel zum Überführen des die Komponenten der Probe enthaltenen, gasförmigen Laufmittels in den Probenraum des Detektors, und
(d) Mittel zum Heizen des Bereichs (40) hinter dem Restriktor.

## Claims

1. Arrangement (10) for determining material properties and/or material concentrations of components of a sample in a liquid mobile solvent which contains mainly water, containing:
(a) a chromatographic separating column for liquid mobile solvents;
(b) means for controlling the temperature inside the separating column between room temperature and 250 °C;
(c) means (24) for creating a pressure level which is greater than the ambient pressure inside the separating column; and
(d) a detector (14) with a sample volume, into which the components of the sample can be introduced,
**characterized in that**
(e) an interface (16) is provided between the separating column and the detector with a tube (34) and a restrictor (34) provided inside said tube, wherein the restrictor (34) is provided for expanding the mobile solvent from an increased pressure level inside the separating column to ambient pressure and producing a phase change of the mobile solvent from the liquid to a gaseous phase without forming an aerosol and wherein the mobile solvent with the sample is liquid in the range (38) upstream of the restrictor and is exposed to an increased pressure and wherein ambient pressure is present downstream (40) of the restrictor,
(f) a heating (32) is provided in the range (40) downstream of the restrictor (34), and
(g) means are provided for transferring the gaseous mobile solvent containing the components of the sample into the sample compartment of the detector (14).

2. Arrangement according to claim 1, **characterized in that** the chromatographic separating column is a High Temperature HPLC column.

3. Arrangement according to any one of the preceding claims, **characterized in that** the component of the sample in the sample compartment can be excited to emit light which is detectable wavelength selectively.

4. Arrangement according to one of the claims 1 or 2, **characterized in that** a mass spectrometer is provided for the mass spectrometric analyses of the component in the sample in the sample compartment.

5. Arrangement according to any one of the preceding claims, **characterized in that** a microwave plasma is provided in the sample compartment.

6. Arrangement according to any one of the claims 1 to 4, **characterized in that** an inductively coupled plasma is provided in the sample compartment.

7. Arrangement according to any one of the preceding claims, **characterized by** means for heating (32) the means for transferring the gaseous mobile solvent containing the components of the sample into the sample compartment of the detector.

8. Arrangement according to any one of the preceding claims, **characterized in that** the means for heating (32) have a heating power which is sufficient to atomize predominantly the components of the sample.

9. Arrangement according to any one of the preceding claims, **characterized in that** are conveyable one or more supplemental dopant gases into the sample compartment.

10. Method for determining material properties and/or material concentrations of components of a sample with the steps:
(a) introducing a sample into a chromatographic separating column which is under elevated pressure with a mobile solvent which predominantly contains water;
(b) heating the separating column at a temperature inside the separating column so that the components of the sample are separated from each other passing the separating column;
(c) expanding the mobile solvent from the elevated pressure level inside the separating column to ambient pressure under phase change of the mobile solvent from the liquid to gaseous phase with a restrictor (34) provided within a tube in an interface while maintaining an increased temperature;
(d) transferring the gaseous mobile solvent containing the components of the sample into the sample compartment of a detector; and
(e) detection of the components of the sample.

11. Method according to claim 10, **characterized in that** a mixture of water and acetonitrile is provided as mobile solvent and that the water portion amounts to at least 50 vol %.

12. Method according to claim 10, **characterized in that** a mixture of water, acetonitrile and HCOOH is provided as mobile solvent and that the volumetric ratio of the components water:acetonitrile:HCOOH amounts to about 80:20:1.

13. Use of a liquid containing predominantly or exclusively water as mobile solvent in an arrangement according to any one of the claims 1 to 9.

14. Interface for connecting a detector to a chromatographic separating column, comprising
(a) connecting means for connecting a chromatographic separating column which is under elevated temperature and which has an elevated pressure with respect to the ambient for liquid mobile solvents of predominantly water;
(b) a restrictor (34) adapted to expand the mobile solvent from the elevated pressure level inside the separating column to ambient pressure under phase change of the mobile solvent from the liquid to gaseous phase without aerosol formation; wherein the mobile solvent with the sample is liquid in the range (38) upstream of the restrictor and is exposed to an increased pressure and wherein ambient pressure is present downstream (40) of the restrictor,
(c) means for transferring the gaseous mobile solvent containing the components of the sample into the sample compartment of the detector, and
(d) means for heating the range (40) downstream of the restrictor.

## Revendications

1. Disposition (10) pour déterminer les propriétés des substances et/ou les concentrations en substances des composants d'un échantillon dans un solvant mobile liquide contenant principalement de l'eau, comprenant
(a) une colonne de séparation chromatographique pour solvants mobiles liquides,
(b) des moyens de commande de la température à l'intérieur de la colonne de séparation comprise entre la température ambiante et 250°C,
(c) des moyens (24) de génération d'un niveau de pression plus élevé que la pression ambiante à l'intérieur de la colonne de séparation, et
(d) un détecteur (14) muni d'un compartiment à échantillons dans lequel les composants de l'échantillon peuvent être introduits,
**caractérisée en ce que**
(e) il est prévu une interface (16) entre la colonne de séparation et le détecteur munie d'un tube (34) et d'un restricteur (34) prévu à l'intérieur du tube, le restricteur (34) étant prévu pour détendre le solvant mobile pour passer du niveau de pression élevé à l'intérieur de la colonne de séparation à la pression ambiante, et pour générer un changement de phase du solvant mobile pour passer de la phase liquide à la phase gazeuse sans formation d'aérosols, dans le domaine (38) situé devant le restricteur le solvant mobile contenant l'échantillon étant liquide et à une pression élevée, et la pression ambiante régnant dans le domaine (40) situé derrière le restricteur,
(f) un chauffage (32) étant prévu dans le domaine (40) situé derrière le restricteur (34), et
(g) il est prévu des moyens de transport du solvant mobile gazeux contenant les composants de l'échantillon dans le compartiment à échantillons du détecteur (14).

2. Disposition selon la revendication 1, **caractérisée en ce que** la colonne de séparation chromatographique est une colonne CLHP à haute température.

3. Disposition selon l'une quelconque des revendications précédentes, **caractérisée en ce que** le composant de l'échantillon peut être stimulé dans le compartiment à échantillons afin d'émettre de la lumière pouvant être détectée en sélectionnant la longueur d'ondes.

4. Disposition selon l'une quelconque des revendications 1 ou 2, **caractérisée en ce qu'**il est prévu un spectromètre de masse pour l'analyse spectrométrique de masse du composant de l'échantillon dans le compartiment à échantillons.

5. Disposition selon l'une quelconque des revendications précédentes, **caractérisée en ce qu'**il est prévu un plasma micro-ondes dans le compartiment à échantillons.

6. Disposition selon l'une quelconque des revendications 1 à 4, **caractérisée en ce qu'**il est prévu un plasma à couplage inductif dans le compartiment à échantillons.

7. Disposition selon l'une quelconque des revendications précédentes, **caractérisée par** des moyens de chauffage (32) des moyens de transport du solvant mobile gazeux contenant les composants de l'échantillon dans le compartiment à échantillons du détecteur.

8. Disposition selon la revendication 7, **caractérisée en ce que** les moyens de chauffage (32) présentent une puissance de chauffage suffisante pour atomiser largement les composants de l'échantillon.

9. Disposition selon l'une quelconque des revendications précédentes, **caractérisée en ce qu'**un ou plusieurs gaz dopants supplémentaires peuvent être amenés à l'intérieur du compartiment à échantillons.

10. Procédé de détermination des propriétés des substances et/ou des concentrations en substances des composants d'un échantillon dans un solvant mobile liquide contenant principalement de l'eau, à l'aide des étampes :
(a) introduire l'échantillon dans une colonne de séparation chromatographique sous pression élevée avec le solvant mobile liquide,
(b) porter la colonne de séparation à une température à l'intérieur de la colonne de séparation de sorte que les composants de l'échantillon sont séparés les uns des autres en parcourant la colonne de séparation,
(c) détendre le solvant mobile pour passer du niveau de pression élevé à l'intérieur de la colonne de séparation à la pression ambiante en changeant de phase du solvant mobile pour passer de la phase liquide à la phase gazeuse sur un restricteur (34) prévu à l'intérieur d'un tube dans une interface, en maintenant une température élevée,
(d) transporter le solvant mobile gazeux contenant les composants de l'échantillon dans le compartiment à échantillons d'un détecteur, et
(e) détecter les composants de l'échantillon.

11. Procédé selon la revendication 10, **caractérisé en ce qu'**il est prévu comme solvant mobile un mélange d'eau et d'acétonitrile et que la part d'eau est au moins de 50 % en vol.

12. Procédé selon la revendication 10, **caractérisé en ce qu'**il est prévu comme solvant mobile un mélange d'eau, d'acétonitrile et de HCOOH et que le rapport volumétrique des composants eau:acétonitrile:HCOOH est d'environ 80:20:1.

13. Utilisation comme solvant mobile d'un liquide contenant principalement ou exclusivement de l'eau dans une disposition selon l'une des revendications 1 à 9.

14. Interface de raccordement d'un détecteur à une colonne de séparation chromatographique, comprenant
(a) des moyens de raccordement pour le raccordement d'une colonne de séparation chromatographique, sous une pression et une température élevées par rapport à celles ambiantes, pour solvants mobiles liquides composés principalement d'eau,
(b) un restricteur (34) configuré de sorte à détendre le solvant mobile pour passer du niveau de pression élevé à l'intérieur de la colonne de séparation à la pression ambiante et à générer un changement de phase du solvant mobile pour passer de la phase liquide à la phase gazeuse sans formation d'aérosols, dans le domaine (38) situé devant le restricteur le solvant mobile contenant l'échantillon étant liquide et à une pression élevée, et la pression ambiante régnant dans le domaine (40) situé derrière le restricteur,
(c) des moyens de transport du solvant mobile gazeux contenant les composants de l'échantillon dans le compartiment à échantillons du détecteur, et
(d) des moyens de chauffage du domaine (40) situé derrière le restricteur.
